# EUROPEAN PATENT APPLICATION

(11) **EP 3 409 939 A1**
(43) Date of publication of application: **05.12.2018**
(21) Application number: 18174363.4
(22) Date of filing: 25.05.2018
(51) Int. Cl.: F02N 11/08

(54) **REMOTE STARTUP SYSTEM, CENTER SERVER, AND REMOTE STARTUP METHOD**

(30) Priority: 31.05.2017 JP 2017108782
(71) Applicant: Toyota Jidosha Kabushiki Kaisha, Aichi-Ken 471-8571 (JP)
(72) Inventor: TAMANE, Yasuyuki, Aichi-ken, 471-8571 (JP); ENDO, Masato, Aichi-ken, 471-8571 (JP)
(74) Representative: Kuhnen & Wacker Patent- und Rechtsanwaltsbüro PartG mbB

(57) **Abstract**

A remote startup system includes a first terminal (200A) and a second terminal (200B), a center server (100) configured to communicate with each of the first terminal (200A) and the second terminal (200B) and receive a startup request from each of the first terminal (200A) and the second terminal (200B), and a vehicle (2) on which a driving device is mounted, the vehicle (2) being configured to communicate with the center server (100), receive a startup request from the center server, and start up the driving device. The remote startup system is configured to prohibit startup of the driving device based on a startup request from the second terminal (200B) when the driving device is started up and being operated based on the startup request from the first terminal (200A) or when the driving device is likely to be started up based on the startup request from the first terminal (200A).

## Description

### BACKGROUND OF THE INVENTION

### 1. Field of the Invention

The present invention relates to a remote startup system for an engine of a vehicle, a center server, and a remote startup method.

### 2. Description of Related Art

A center type remote startup system that starts up a driving device such as an engine or an electric compressor (an electric motor) for air conditioning in response to a startup request transmitted from a portable communication terminal device carried by a user to a vehicle remotely located via a center server has been known (see, for example, Japanese Unexamined Patent Application Publication No. 2013-238184 (JP 2013-238184 A)).

### SUMMARY OF THE INVENTION

However, since a configuration in which a startup request for the driving device (hereinafter referred to as "startup request") can be transmitted from a plurality of communication terminals (hereinafter referred to as "terminals") to the center server can be adopted, the startup request transmitted from each of the terminals are likely to interfere in on a reception side of the center server or the vehicle that controls the startup of the driving device.

The present invention provides a center type remote startup system, a center server, and a remote startup method capable of suppressing a situation in which startup requests transmitted from a plurality of terminals interfere in a center server or a vehicle.

A first aspect of the present invention relates to a remote startup system including: a first terminal; a second terminal; a center server configured to communicate with each of the first terminal and the second terminal and receive a startup request from each of the first terminal and the second terminal; and a vehicle on which a driving device is mounted, the vehicle being configured to communicate with the center server, receive a startup request from the center server, and start up the driving device. The remote startup system is configured to prohibit startup of the driving device based on a startup request from the second terminal when the driving device is started up and being operated based on the startup request from the first terminal or when the driving device is likely to be started up based on the startup request from the first terminal.

According to the first aspect of the present invention, when the driving device such as an engine is started up and being operated based on the startup request from the first terminal or when the driving device is likely to be started up, the startup of the driving device based on a startup request from the second terminal is controlled not to be performed. Therefore, even when the startup requests are transmitted from the first terminal and the second terminal, it is possible to suppress a situation in which the startup requests transmitted from the first terminal and the second terminal interfere on the reception side of the center server or the vehicle.

In the remote startup system according to the first aspect of the present invention, each of the first terminal and the second terminal may include a pairing request transmission unit configured to transmit a pairing request for requesting a one-to-one connection between a connection target of a predefined one of the center server and the vehicle and a terminal including the pairing request transmission unit among the first terminal and the second terminal to the center server with the connection target as a destination. One of the center server and the vehicle corresponding to the connection target may include a pairing establishment unit configured to establish a one-to-one connection state with the connection target with solely one of the terminal and the second terminal as a target according to the received pairing request. The center server or the vehicle may include a controller configured to accept solely the startup request transmitted from a terminal of which the connection state with the connection target is established by the pairing establishment unit among the first terminal and the second terminal and start up the driving device.

According to the first aspect of the present invention, the one-to-one pairing is established between solely one terminal as a target and the vehicle or the center server (a connection target) that controls the startup of the driving device based on the startup request. When pairing is established between a certain terminal and the vehicle or the center server, a determination can be made that the startup of the driving device based on the startup request from the terminal is likely to be performed. Therefore, the startup request from a first terminal of which the pairing has been established is accepted and the driving device is started up in response to the startup request, whereas a startup request from the second terminal of which pairing has not been established is not accepted. Therefore, it is possible to suppress a situation in which the startup requests transmitted from the first terminal and the second terminal interfere on the reception side.

In the remote startup system according to the first aspect of the present invention, the pairing establishment unit may be configured to release the connection state between the first terminal and the connection target and establish the connection state between the second terminal and the connection target when the pairing request is received from the second terminal in a situation in which the connection state between the first terminal and the connection target is established.

According to the first aspect of the present invention, when the pairing request is transmitted from the second terminal even in a case where the pairing has already been established between the first terminal and the connection target, the pairing between the first terminal and the connection target is released and the pairing between the second terminal and the connection target is established. Therefore, for example, in a case where a user different from a user of the first terminal wishes to start up the driving device using the second terminal, the user can start up the driving device using the second terminal even in a state in which the pairing state between the first terminal that has transmitted the pairing request and the connection target is not released.

In the remote startup system according to the first aspect of the present invention, the pairing request transmission unit may be configured to transmit an agreement notification indicating agreement on release of the connection state between the first terminal and the connection target to the center server together with or separately from the pairing request according to a predetermined operation of a user; and the pairing establishment unit may be configured to release the connection state between the first terminal and the connection target and establish the connection state between the second terminal and the connection target when the pairing request and the agreement notification are received from the second terminal.

According to the first aspect of the present invention, when the pairing request is transmitted from the second terminal even in a case where the pairing has already been established with the first terminal, agreement on the release of pairing of the first terminal is obtained from the user of the second terminal, pairing of the first terminal is released, and pairing of the second terminal is established. Therefore, since the user of the second terminal agrees on the release of the pairing with the first terminal and then causes pairing with the terminal (the second terminal) to be established, it is possible to suppress a situation in which pairing with the first terminal is released against the intention of the user of the second terminal.

In the remote startup system according to the first aspect of the present invention, one of the center server and the vehicle corresponding to the connection target may include a release schedule notification transmission unit configured to transmit a release schedule notification indicating the connection state between the first terminal and the connection target is scheduled to be released, to the first terminal or the center server with the first terminal as a destination, the notification of the release schedule notifying that the connection state is to be released when the pairing request is transmitted from the second terminal to the center server with the connection target as a destination in a situation in which the connection state between the first terminal and the connection target is established. Each of the first terminal and the second terminal may include a display unit configured to display an operation screen for allowing a user to agree on release of the connection state between the first terminal including the display unit and the connection target when the release schedule notification is received. Each of the first terminal and the second terminal may include an agreement notification transmission unit configured to transmit an agreement notification indicating agreement on release of the connection state to the center server with the connection target as a destination when an operation of agreeing on release of the connection state between the first terminal including the agreement notification transmission unit and the connection target is performed in the operation screen. The pairing establishment unit may be configured to release the connection state between the first terminal and the connection target and establish the connection state between the second terminal and the connection target when the agreement notification is received from the first terminal.

According to the first aspect of the present invention, when the pairing request is transmitted from the second terminal even in a case where pairing has already been established with the first terminal, agreement on the release of pairing of the first terminal is obtained from the user of the first terminal, pairing of the first terminal is released, and pairing of the second terminal is established. Therefore, it is possible to suppress a situation in which pairing with the first terminal is released against the intention of the user of the first terminal.

In the remote startup system according to the first aspect of the present invention, each of the first terminal and the second terminal may include a right request transmission unit configured to transmit a right request for requesting assignment of a right to perform the startup of the driving device based on the startup request to the center server with a request target of predefined one of the center server and the vehicles as a destination. The request target among the center server and the vehicle may include a right assignment unit configured to assign a right to solely one of the first terminal and the second terminal as a target in response to a right request transmitted from the first terminal and the second terminal.

According to the first aspect of the present invention, a right to perform startup of the driving device is assigned solely to one terminal. When the right is assigned to a certain terminal, a determination can be made that the startup of the driving device based on the startup request from the terminal is actually performed. Therefore, when the right has already been assigned to one terminal, another terminal to which the right is not assigned cannot perform startup of the driving device based on the startup request, that is, the startup of the driving device based on the startup request from the other terminal is prohibited. Since the right to perform the startup of the driving device based on the startup request, that is, a right to transmit the startup request is assigned solely to one terminal and is not assigned to the other terminals, the startup request is not initially transmitted from the terminals at the same timing. Therefore, it is possible to suppress a situation in which the startup requests transmitted from the terminals interfere on the reception side.

In the remote startup system according to the first aspect of the present invention, the center server or the vehicle may include a retry request transmission unit configured to transmit a retry request for requesting an ex-post retransmission of the right request to the second terminal or the center server with the second terminal as a destination when a right request is transmitted from the second terminal or when a function for transmitting the startup request is activated in the second terminal in a case where a right is assigned to the first terminal by the right assignment unit. Each of the first terminal and the second terminal may include a display unit that is configured to display a notification for requesting an ex-post retransmission of the right request when the retry request is received.

According to the first aspect of the present invention, when a right request is transmitted from the second terminal or an application for transmitting the startup request, or the like is activated in a state in which the right has already been assigned to the first terminal, a notification for requesting a retry of an ex-post transmission of the right request is displayed on the display unit of the terminal. Therefore, in a case where the user of the second terminal wishes to start up the driving device later in a state in which the right has already been assigned to the first terminal, the user of the second terminal can be notified in advance that the startup right for the driving device cannot be assigned.

In the remote startup system according to the first aspect of the present invention, each of the first terminal and the second terminal may include a right request transmission unit configured to transmit a right request for requesting assignment of a right to perform the startup of the driving device based on the startup request to the center server with a request target of predefined one of the center server and the vehicles as a destination. One of the center server and the vehicle corresponding to the request target may include a right assignment unit configured to assign a right to a terminal that is a transmission source of the right request among the first terminal and the second terminal when the right request is received. The center server or the vehicle may include a controller configured to start up the driving device based on the startup request received from a terminal to which the right is assigned by the right assignment unit among the first terminal and the second terminal. The controller may be configured to prohibit the startup of the driving device based on the startup request transmitted from the other terminal to which the right is assigned by the right assignment unit among the first terminal and the second terminal when the driving device is started up and being operated based on a startup request from one of the first terminal and the second terminal to which the right is assigned by the right assignment unit or when the driving device is likely to be started up.

According to the first aspect of the present invention, in a situation in which the driving device is started up and being operated according to the startup request from one terminal to which the right to perform the startup of the driving device has been assigned, or a situation in which the driving device is likely to be started up immediately after the startup request has been transmitted, the startup of the driving device based on the startup request from the other terminal to which the right has been assigned can be prohibited. Therefore, it is possible to suppress a situation in which the startup requests transmitted from the terminals interfere on the reception side. It is needed to assign the right to the terminal in advance in order to start up the driving device, and it is possible to limit the terminal itself that is a transmission target of the startup request. Accordingly, it is possible to suppress a situation in which the startup requests transmitted from the terminals interfere on the reception side.

In the remote startup system according to the first aspect of the present invention, the center server or the vehicle may include a non-permission notification transmission unit configured to transmit a non-permission notification indicating that the startup of the driving device based on the startup request is not permitted to the other terminal or the center server with the other terminal to which the right has been assigned by the right assignment unit among the first terminal and the second terminal as a destination, when the driving device is started up and being operated based on the startup request from the one terminal to which the right has been assigned by the right assignment unit among the first terminal and the second terminal or when the driving device is likely to be started up. Each of the first terminal and the second terminal may include a display unit configured to display an operation screen including an operation portion for transmitting the startup request to the center server. When the non-permission notification is received, an indication that the startup of the driving device based on the startup request is not permitted may be displayed, and the operation portion may not be displayed or may be displayed in a state in which the operation portion is not operated on the operation screen of the display unit.

According to the first aspect of the present invention, in a case where the driving device is started up and being operated due to the startup request from one terminal to which the right to perform the startup of the driving device has been assigned, or when the driving device is likely to be started up, an operation portion such as a virtual button for transmitting a startup request on the operation screen of the other terminal is in a non-display state or an operation disabled state. Therefore, since the transmission of an unnecessary startup request can be suppressed, it is possible to further suppress a situation in which the startup requests transmitted from the terminals interferes on the reception side.

A second aspect of the present invention relates to a center server configured to communicate with each of a first terminal, a second terminal, and a vehicle, receive a startup request transmitted from each of the first terminal and the second terminal, and start up a driving device mounted on the vehicle based on the startup request, The center server is configured to prohibit startup of the driving device based on a startup request from the other terminal among the first terminal and the second terminal when the driving device is started up and being operated based on the startup request from one of the first terminal and the second terminal or when the driving device is likely to be started up based on the startup request from the first terminal.

A third aspect of the present invention relates to a remote startup method that is executed by a remote startup system including a first terminal and a second terminal; a center server communicable with each of the first terminal and the second terminal, and a vehicle communicable with the center server, and starting up a driving device mounted on the vehicle based on a startup request transmitted from each of the first terminal and the second terminal to the center server. The remote startup method includes prohibiting startup of the driving device based on the startup request from the other terminal among the first terminal and the second terminal when the driving device is started up and being operated based on the startup request from one of the first terminal and the second terminal or when the driving device is likely to be started up based on the startup request from the first terminal.

It is possible to provide, for example, a center type remote startup system, a center server, and a remote startup method capable of suppressing a situation in which startup requests transmitted from a plurality of terminals interfere in a center server or a vehicle.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a configuration diagram illustrating an example of a configuration of a remote startup system;
FIG. 2 is a functional block diagram illustrating an example of a functional configuration of a vehicle (an air conditioner ECU and an engine ECU) according to a first embodiment;
FIG. 3 is a functional block diagram illustrating an example of a functional configuration of a center server (a processing device) according to the first embodiment;
FIG. 4 is a functional block diagram illustrating an example of a functional configuration of a terminal (a processing device) according to the first embodiment;
FIG. 5 is a sequence diagram schematically illustrating an example of an operation of the remote startup system according to the first embodiment;
FIG. 6 is a diagram illustrating an example of a remote startup operation screen;
FIG. 7 is a diagram illustrating an example of a pairing release notification screen;
FIG. 8 is a functional block diagram illustrating an example of a functional configuration of a center server (a processing device) according to a second embodiment;
FIG. 9 is a sequence diagram illustrating an example of an operation of the remote startup system according to the second embodiment;
FIG. 10 is a diagram illustrating an example of a remote startup operation screen;
FIG. 11 is a diagram illustrating an example of a retry request notification screen;
FIG. 12 is a sequence diagram illustrating an example of an operation of a remote startup system according to a third embodiment; and
FIG. 13 is a diagram illustrating an example of an operation non-permission notification screen.

### DETAILED DESCRIPTION OF EMBODIMENTS

Hereinafter, modes for carrying out the invention will be described with reference to the drawings.

### First Embodiment

### Configuration of Remote Startup System

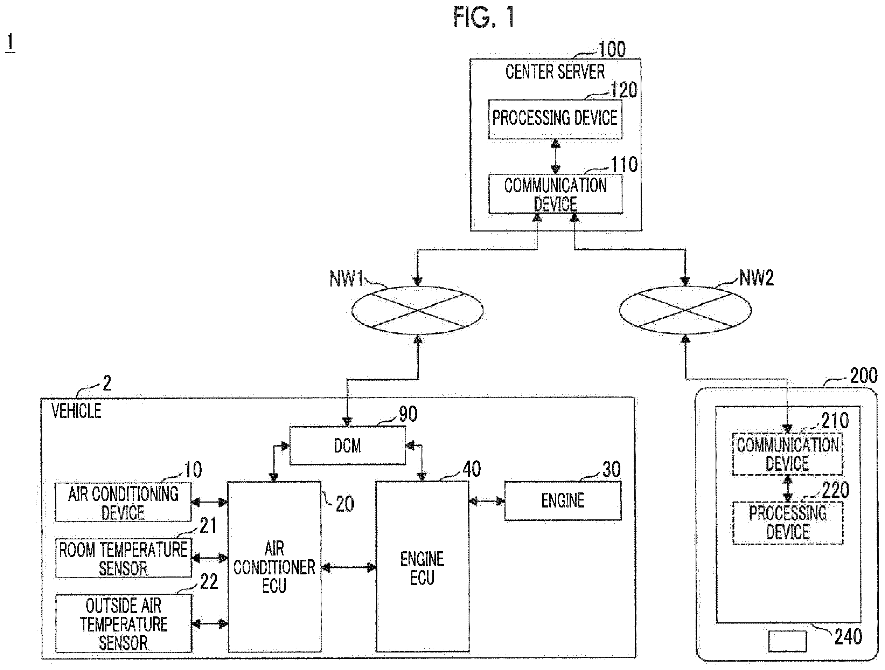

First, a configuration of a remote startup system 1 according to the embodiment will be described with reference to FIGS. 1 to 4.

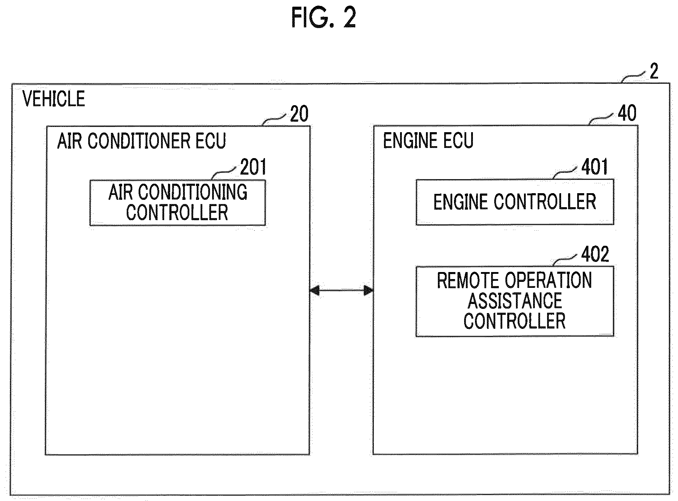

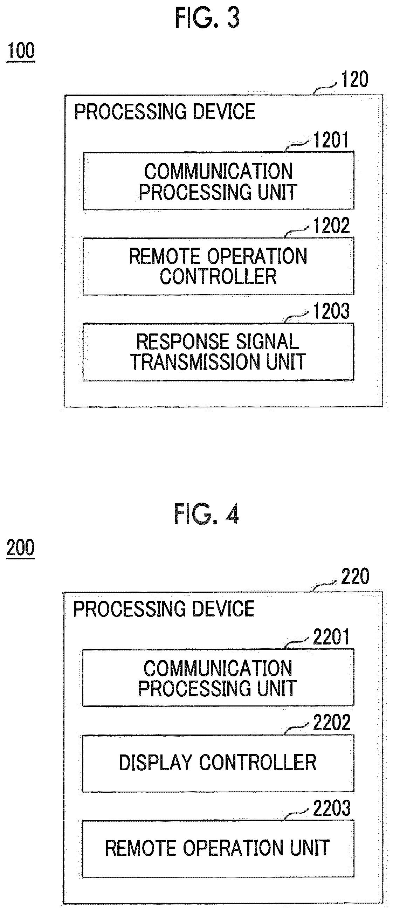

FIG. 1 is a configuration diagram illustrating an example of a configuration of the remote startup system 1 according to the embodiment. FIG. 2 is a functional block diagram illustrating an example of a functional configuration of a vehicle 2 (an air conditioner electronic control unit (ECU) 20 and an engine ECU 40) according to the first embodiment. FIG. 3 is a functional block diagram illustrating an example of a functional configuration of a center server 100 (a processing device 120) according to the first embodiment. FIG. 4 is a functional block diagram illustrating an example of a functional configuration of a terminal 200 (a processing device 220) according to the first embodiment.

The remote startup system 1 includes the vehicle 2, the center server 100, and a plurality of terminal 200 carried by a user, and starts up an engine 30 and an air conditioning device 10 of the vehicle 2 to be described below based on a startup request that is transmitted from the respective terminal 200 to the center server 100.

Since configurations related to the respective remote startup systems 1 of the terminals 200 are the same, one of the terminals 200 is representatively illustrated in FIGS. 1 and 4.

The vehicle 2 includes an air conditioning device 10, the air conditioner electronic control unit (ECU) 20, a room temperature sensor 21, an outside air temperature sensor 22, the engine 30, the engine ECU 40, and a data communication module (DCM) 90.

The air conditioning device 10 adjusts, for example, a temperature in the cabin of the vehicle 2. The air conditioning device 10 includes, for example, a refrigeration cycle including an evaporator (not illustrated) and a compressor (not illustrated) that is driven by the engine 30, and a heater (not illustrated) using coolant of the engine 30 as a heat source. Under the control of the air conditioner ECU 20 (the air conditioning controller 201 to be described below), the air conditioning device 10 adjusts the temperature of air sent out from an air outlet by appropriately setting a ratio of air cooled by passing through the evaporator (cold air) to air warmed using the coolant of the engine 30 as a heat source (hot air) in a changeable manner. The air conditioning device 10 has a defroster mode, and removes frost that is generated on the outside of a windshield of the vehicle 2 or fog generated on the cabin-side of the windshield of the vehicle 2 by sending air having a relatively low humidity and a relatively high temperature along the windshield of the vehicle 2 from the air outlet corresponding to the defroster mode.

The air conditioner ECU 20 is an electronic control unit that performs various controls regarding the air conditioning device 10. The function of the air conditioner ECU 20 may be realized by any hardware, any software, or a combination thereof. The air conditioner ECU 20 may be mainly configured of, for example, a microcomputer including a central processing unit (CPU), a random access memory (RAM), a read only memory (ROM), an auxiliary storage device, an input-output interface (I/O), and the like. Hereinafter, the same applies to the engine ECU 40. The air conditioner ECU 20 includes, for example, an air conditioning controller 201 as a functional unit that is realized by executing one or more programs stored in a ROM, an auxiliary storage device, or the like on the CPU.

The air conditioning controller 201 controls an operation of the air conditioning device 10 according to a set state of a set temperature, a mode (a plurality of air outlet modes according to a combination of the air outlets or defroster mode), and the like. Specifically, the air conditioning controller 201 controls the operation of the air conditioning device 10, for example, so that the room temperature of the vehicle 2 becomes the set temperature, based on a detected value of the room temperature sensor 21, the outside air temperature sensor 22, and the like. The air conditioning controller 201 starts up the air conditioning device 10 according to an air conditioning startup request from a remote operation assistance controller 402 to be described below and controls the operation of the air conditioning device 10 according to setting content included in the air conditioning startup request.

Various ECUs including the air conditioner ECU 20 and the engine ECU 40, and the DCM 90 are communicatively connected to each other over an in-vehicle network based on a communication protocol of a controller area network (CAN) or the like.

The room temperature sensor 21 is provided in the cabin of the vehicle 2, such as the inside of an instrument panel (not illustrated), and detects a temperature in the cabin of the vehicle 2 (room temperature of the vehicle). The room temperature sensor 21 is communicatively connected to the air conditioner ECU 20 via a one-to-one communication line or the like. A detection signal corresponding to the room temperature of the vehicle 2 detected by the room temperature sensor 21 is input to the air conditioner ECU 20.

The outside air temperature sensor 22 is provided on an outside of the vehicle 2 such as a front end portion of an engine compartment provided in a front portion of the vehicle 2 (a portion into which outside air is introduced), that is, on the back side of a front grille of the vehicle 2, and detects a temperature of the outside (outside air temperature) of the vehicle 2. The outside air temperature sensor 22 is communicatively connected to the air conditioner ECU 20 via a one-to-one communication line or the like, and a detection signal corresponding to the detected outdoor air temperature is input to the air conditioner ECU 20.

The engine 30 (an example of a driving device) is a driving force source of the vehicle 2 and is a driving force source of the air conditioning device 10, specifically, the compressor in the refrigeration cycle of the air conditioning device 10. The engine 30 is operated by burning gasoline, light oil, or the like supplied from a fuel tank (not illustrated) via a fuel pump (not illustrated) in a cylinder under the control of the engine ECU 40. The engine 30, specifically, various actuators (a fuel injection device that injects fuel, an ignition device that ignites gasoline injected into the cylinder, an electric motor for changing an opening and closing timing of an intake or exhaust valve, or the like) assembled in the engine 30 are communicably connected to the engine ECU 40 via a one-to-one communication line or the like, and are operated according to a control command transmitted from the engine ECU 40.

The engine ECU 40 is an electronic control unit that performs various control processes of the engine 30 including a starter (not illustrated). The engine ECU 40 includes, for example, an engine controller 401 and a remote operation assistance controller 402 as functional units that are realized by executing one or more programs stored in a ROM, an auxiliary storage device, or the like.

The engine controller 401 (an example of a controller) performs operation control of the engine 30 according to an operation state by a driver of the vehicle 2 (for example, an accelerator operation amount or a selected gear shift stage of a transmission (not illustrated)), an environmental state of surroundings of the vehicle 2 (for example, an outside air temperature), or the like. For example, when an ignition switch (IG switch) is turned ON (IG-ON) or when an engine startup request is input from the outside, the engine controller 401 starts up the engine 30. Specifically, the engine controller 401 switches a relay (not illustrated) for energizing a starter to a connection state to drive the starter, and appropriately controls a fuel injection device and an ignition device according to cranking by the starter to start up the engine 30.

According to a startup request that is received from the terminal 200 via the center server 100, the remote operation assistance controller 402 transmits an engine startup request and an air conditioning startup request to the engine controller 401 and the air conditioning controller 201, respectively, to start up the engine 30 and the air conditioning device 10. When a predetermined end condition is satisfied after the engine 30 and the air conditioning device 10 are started up, the remote operation assistance controller 402 transmits an engine stop request and an air conditioning stop request to the engine controller 401 and the air conditioning controller 201, respectively, to stop the engine 30 and the air conditioning device 10. For example, when a set operation time included in the startup request or defined in advance has elapsed from the startup of the engine 30 and the air conditioning device 10 as an end condition, the remote operation assistance controller 402 may stop the engine 30 and the air conditioning device 10. For example, when the room temperature of the vehicle has been determined to have reached a set temperature included in the startup request or defined in advance after the startup of the engine 30 and the air conditioning device 10 as an end condition, the remote operation assistance controller 402 may stop the engine 30 and the air conditioning device 10. For example, when a signal indicating that an operation for stopping the engine 30 and the air conditioning device 10 is executed has been received from the terminal 200 via the center server 100 by the DCM 90 as an end condition, the remote operation assistance controller 402 may stop the engine 30 and the air conditioning device 10.

The function of the remote operation assistance controller 402 may be provided in the air conditioner ECU 20 or may be provided in another ECU that can communicate with the air conditioner ECU 20 and the engine ECU 40 via an in-vehicle network based on a communication protocol such as a CAN.

The DCM 90 is, for example, a communication device that bidirectionally communicates with the center server 100 over a predetermined communication network NW1 including a mobile phone network including a plurality of base stations as ends, an Internet network, or the like (hereinafter, the sample applies to a communication network NW2). As described above, the DCM 90 is mutually communicably connected to various ECUs such as the air conditioner ECU 20 and the engine ECU 40 over an in-vehicle network such as a CAN.

The center server 100 is interposed between the vehicle 2 and the terminal 200 carried by the user, and performs control regarding a remote operation of the vehicle 2 using the terminal 200 by the user, specifically, control regarding the startup of the engine 30 of the vehicle 2 based on a remote operation from the terminal 200. The center server 100 includes a communication device 110 and a processing device 120.

The communication device 110 is a device that bidirectionally communicates with the vehicle 2 (specifically, the DCM 90) and the terminal 200 (specifically, the communication device 210) over the communication networks NW1 and NW2 under the control of the processing device 120 (specifically, the communication processing unit 1201).

The processing device 120 executes various control processes in the center server 100. The function of the processing device 120 may be realized by any hardware, any software, or a combination thereof. For example, the processing device 120 may be mainly configured of one or a plurality of server computers each including a CPU, a RAM, a ROM, an auxiliary storage device, an I/O, and the like. The processing device 120 includes, for example, a communication processing unit 1201, a pairing processing unit 1202, and a remote operation controller 1203, as functional units that are realized by executing one or more programs stored in the ROM or the auxiliary storage device on the CPU.

The communication processing unit 1201 controls the communication device 110 to transmit and receive various signals (control signals, information signals, or the like) to and from the vehicle 2 and the terminal 200.

The pairing processing unit 1202 performs a process (a pairing process) of establishing a connection state in which the center server 100 and the terminal 200 are connected to each other on a one-to-one basis (a pairing state) with solely one terminal 200 as a target in response to the pairing request transmitted from the terminal 200. Thus, when a pairing process is performed by the pairing processing unit 1202, the center server 100 enters a pairing state in which the center server 100 is communicably connected to solely one terminal 200 on a one-to-one basis. Therefore, since the other terminal 200 of which the pairing state with the center server 100 is not established cannot transmit the startup request to the center server 100, it is possible to prevent the startup requests from being transmitted from the terminals 200 to the center server 100 at the same timing. That is, it is possible to avoid a situation in which the startup requests interfere on the reception side (the center server 100).

The pairing processing unit 1202 releases the pairing state between the terminal 200 and the center server 100 in response to the pairing release request transmitted from the terminal 200 of which the pairing state with the center server 100 has already been established.

The remote operation controller 1203 (an example of a controller) performs control regarding the startup of the engine 30 based on the startup request received from the terminal 200 by the communication processing unit 1201. For example, when the startup request from the terminal 200 paired with the center server 100 is received by the communication processing unit 1201, the remote operation controller 1203 transmits the startup request to the vehicle 2 via the communication processing unit 1201 and starts up the engine 30 and the air conditioning device 10.

The terminal 200, for example, transmits the startup request for the engine 30 according to a predetermined operation input from the user to perform a remote operation regarding the startup of the vehicle 2. The terminal 200 is, for example, a mobile terminal such as a smartphone or a tablet terminal carried by a user of the vehicle 2. The terminal 200 may be a stationary terminal carried by the user of the vehicle 2, such as a desktop type computer terminal. The terminal 200 includes a communication device 210, a processing device 220, and a touch panel display (hereinafter simply referred to as a "display") 240.

The communication device 210 is a device that performs bidirectional communication with the center server 100 over the communication network NW2 under the control of the processing device 220 (specifically, a communication processing unit 2201 to be described below) and is, for example, a Long Term Evolution (LTE) module.

The processing device 220 performs various control processes in the terminal 200. The processing device 220 may be mainly configured of, for example, a computer including a CPU, a RAM, a ROM, an auxiliary storage device, an I/O, and the like. The processing device 220 includes, for example, a communication processing unit 2201, a display controller 2202, and a remote operation unit 2203, as functional units that are realized by executing one or more programs stored in the ROM, the auxiliary storage device, or the like on the CPU.

The communication processing unit 2201 controls the communication device 210 and transmits and receives various signals to and from the center server 100.

The display controller 2202 displays various images on the display 240. For example, the display controller 2202 displays various graphical user interfaces (GUIs) as operation screens on the display 240.

The remote operation unit 2203 executes various processes regarding a remote operation of the engine 30 and the air conditioning device 10 according to a predetermined operation of the user with respect to a predetermined GUI displayed on the display 240 by the display controller 2202. A function of the remote operation unit 2203 becomes available, for example, by activating a predetermined application program (hereinafter referred to as "remote operation application") installed in the terminal 200 (the processing device 220) according to a predetermined operation of the user.

For example, the remote operation unit 2203 transmits various signals related to the remote operation of the vehicle 2 including a pairing request and a pairing release request for requesting establishment and release of a pairing state with the center server 100 according to a predetermined operation of the user with respect to various GUIs displayed on the display 240 due to activation of the remote operation application, the startup request for requesting the startup of the engine 30 and the air conditioning device 10, and the like to the center server 100 via the communication processing unit 2201. Thus, the pairing request is transmitted to the center server 100, and the pairing state can be established between the center server 100 and one terminal 200. The startup request transmitted to the center server 100 is received by the center server 100. Under the control of the center server 100 (specifically, the remote operation controller 1203), the startup request is transmitted to the vehicle 2, and the engine 30 and the air conditioning device 10 can be started up. For example, the user can perform various settings when operating the air conditioning device 10 on a predetermined GUI, and the remote operation unit 2203 transmits various signals such as a startup request including the various settings to the center server 100. Thus, in the vehicle 2, control of the air conditioning device 10 based on the setting content (a set temperature as a requested value of the room temperature by the user, a set operation time as a requested value of an operation time of the air conditioning device 10 by the user, or the like) is performed.

### Detailed Operation of Remote Startup System

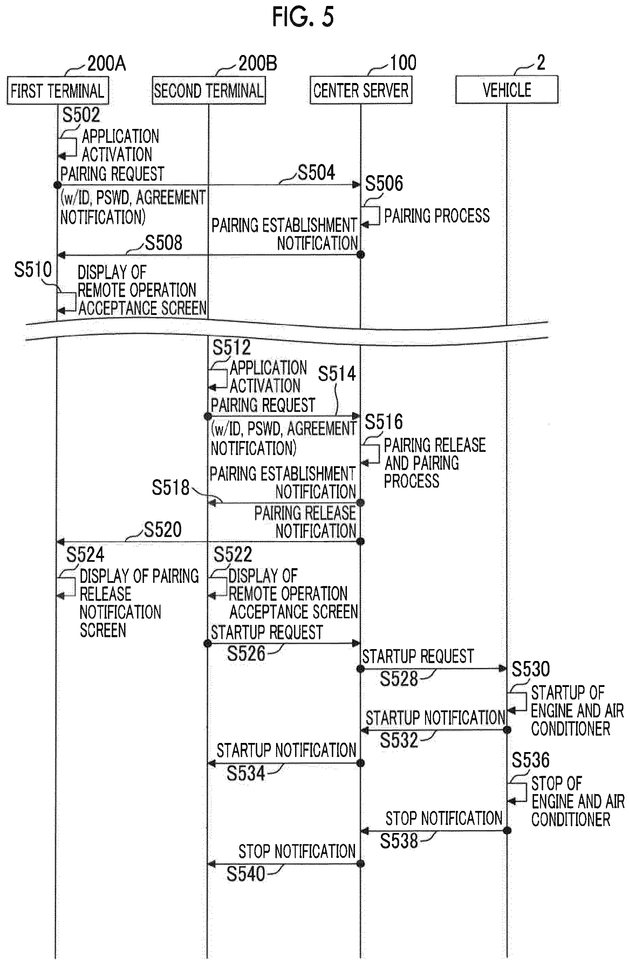

A specific operation of the remote startup system 1 according to the first embodiment will be described with reference to FIGS. 5 to 7.

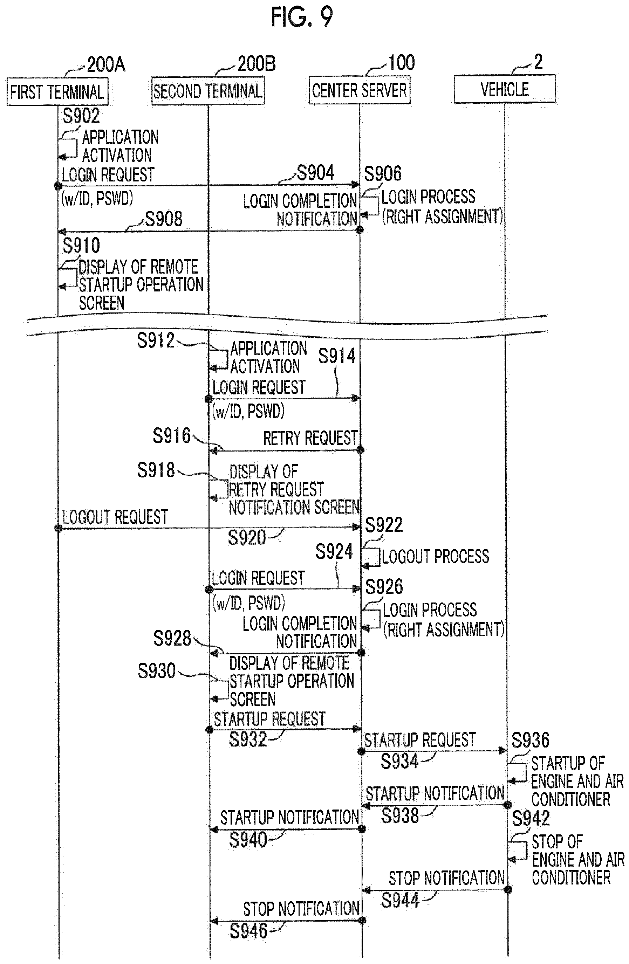

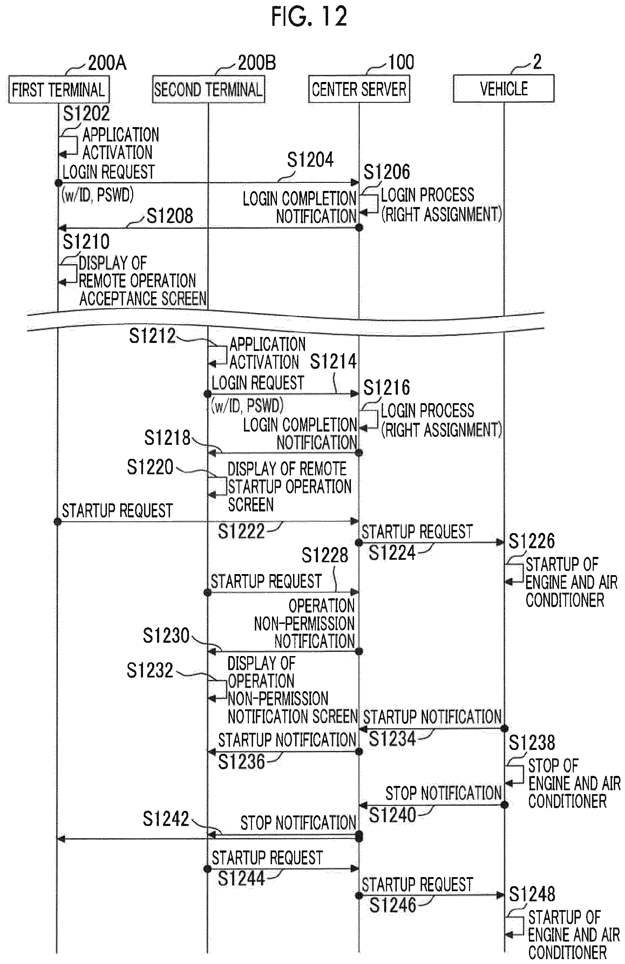

FIG. 5 is a sequence diagram schematically illustrating an example of the operation of the remote startup system 1 according to the first embodiment. Specifically, this is a specific example of the operation of the remote startup system 1 in a case where the first and second terminals 200A, 200B are registered in advance as the terminals 200 capable of remotely operating the vehicle 2. Hereinafter, the communication device 210, the processing device 220, the display 240, the communication processing unit 2201, the display controller 2202, and the remote operation unit 2203 of the first terminal 200A are respectively referred to as a communication device 210A, a processing device 220A, a display 240A, a communication processing unit 2201A, a display controller 2202A, and a remote operation unit 2203A. The communication device 210, the processing device 220, the display 240, the communication processing unit 2201, the display controller 2202, and the remote operation unit 2203 of the second terminal 200B are respectively referred to as a communication device 210B, a processing device 220B, a display 240B, a communication processing unit 2201B, a display controller 2202B, and a remote operation unit 2203B. The same applies to FIGS. 9 and 12 to be described below.

It is assumed that there is no terminal 200 of which a pairing state has been established with the center server 100 before start of the operation according to this example.

In step S502, the first terminal 200A activates the remote operation application according to a predetermined operation of the user with respect to the GUI of the display 240 by the display controller 2202.

In step S504, the remote operation unit 2203A of the first terminal 200A transmits a pairing request to the center server 100 via the communication processing unit 2201A (an example of a pairing request transmission unit) according to a predetermined operation of the user with respect to the GUI of the display 240. The pairing request includes an identifier (ID) which is an identifier unique to the first terminal 200A, a password associated with the ID, and an agreement notification. The agreement notification is a notification indicating that the user of the terminal 200 agrees on the fact that the pairing state between the terminal 200 and the center server 100 is released when there is a terminal 200 already paired with the center server 100, as described below. The ID, the password, and the agreement notification are input by the user on the GUI (an operation screen) for transmitting the pairing request, and the content is transmitted to the center server 100 together with the pairing request. As described above, in order to release the pairing between another terminal 200 and the center server 100 that has already been established based on the agreement of the user, it is possible to suppress a situation in which the pairing state between the other terminal 200 and the center server 100 is released against the intention of the user of the terminal 200 that is a transmission source of the pairing request.

The agreement notification may be transmitted to the center server 100 separately from the pairing request. In this case, when the pairing request from the terminal 200 is received and the pairing state between another terminal 200 and the center server 100 has already been established, the center server 100 transmits a notification indicating that the pairing request between the other terminal 200 and the center server 100 that has already been established is scheduled to be released (a release schedule notification) to the terminal 200 that is a transmission source that the pairing state. When the release schedule notification is received from the center server 100, the terminal 200 may display a notification screen indicating reception of the release schedule notification on the display 240 and display an operation portion (GUI) for the user performing agreement on the fact that the pairing state between the other terminal 200 and the center server 100 is released in the notification screen. Thus, the user can agree on the fact that the pairing state between another terminal 200 and the center server 100 is released by a predetermined operation with respect to the GUI, and the terminal 200 can transmit agreement notification related to agreement content to the center server 100 separately from the pairing request.

In step S506, since the pairing processing unit 1202 of the center server 100 has no pairing state that has already been established with the center server 100, the pairing processing unit 1202 of the center server 100 establishes the pairing state between the first terminal 200A that is a transmission source of the pairing request and the center server 100.

In step S508, the pairing processing unit 1202 of the center server 100 transmits a notification indicating that a pairing state with the center server 100 has been established (a pairing establishment notification) to the terminal 200 via the communication processing unit 1201.

In step S510, when the pairing establishment notification is received from the center server 100 by the communication processing unit 2201A, the display controller 2202A of the first terminal 200A displays a remote startup operation screen for performing various operations related to the remote operation of the vehicle 2 including transmission of the startup request to the center server 100 on the display 240A. Thus, when the pairing state between the first terminal 200A and the center server 100 is established, the remote startup operation screen is automatically displayed on the display 240A. Accordingly, it is needed to perform an operation for displaying the remote startup operation screen on the display 240, and convenience for the user can be improved.

A configuration in which a remote startup operation screen can be displayed on the display 240 of the terminal 200 for the first time in a case where the pairing state between the terminal 200 and the center server 100 is established may be adopted. Thus, since the startup request cannot be transmitted from the terminal 200 of which the pairing state with the center server 100 has not been established, it is possible to further suppress interference due to the transmission of the startup request from the terminals 200 to the center server 100 at the same timing.

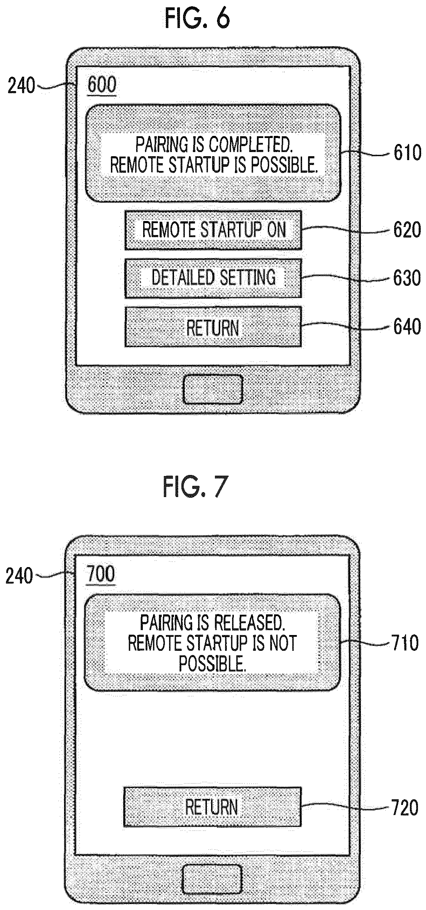

For example, FIG. 6 is a diagram illustrating an example (a remote startup operation screen 600) of the remote startup operation screen according to the first embodiment.

As illustrated in FIG. 6, a pop-up 610 is displayed in an upper area of the remote startup operation screen 600 of the display 240. Since the pairing state between the center server 100 and the target terminal 200 is established, text information indicating that the startup of the engine 30 based on the transmission of the startup request to the center server 100 can be performed Information is displayed in the pop-up 610.

Virtual buttons 620 to 640 for accepting an operation of the user are displayed side by side in a vertical direction from a vertical central area to a lower area of the remote startup operation screen 600.

The button 620 is operation means for transmitting the startup request to the center server 100. Specifically, text information "Remote startup ON" is assigned. Thus, by performing an operation with respect to the button 620, the user can transmit the startup request to the center server 100 and start up the engine 30.

The button 630 is operation means for shifting to a setting screen for setting various pieces of setting content (a set temperature, a set operation time, or the like) included in the startup request. Specifically, text information "Detailed setting" is drawn. Thus, the user can set various pieces of setting content related to the startup request by operating the button 630.

The button 640 is virtual operation means for returning from the screen to a home screen of the remote operation application. Specifically, text information "Back" is drawn.

Referring back to FIG. 5, in a state in which the pairing state between the first terminal 200A and the center server 100 is established and the startup of the engine 30 based on the startup request is not performed (the engine 30 is not operated), the second terminal 200B activates the remote operation application according to a predetermined operation of the user with respect to the GUI that is displayed on the display 240B by the display controller 2202B in step S512.

In step S514, the remote operation unit 2203B of the second terminal 200B transmits a pairing request to the center server 100 via the communication processing unit 2201B (an example of a pairing request transmission unit) according to a predetermined operation of the user with respect to the GUI of the display 240B. As described above, the pairing request includes an identifier (ID) unique to the second terminal 200B, a password associated with the ID, and an agreement notification.

In step S516, when the pairing request from the second terminal 200B is received by the communication processing unit 1201, the pairing processing unit 1202 of the center server 100 releases the previously established pairing state between the first terminal 200A and the center server 100 and establishes a pairing state between the second terminal 200B and the center server 100. Thus, even when the pairing state between the first terminal 200A that has previously transmitted the pairing request and the center server 100 is continuously maintained, the pairing state between the second terminal 200B of the user different from the first terminal 200A and the center server 100 can be established. That is, even when the pairing state has already been established between one terminal 200 (the first terminal 200A) and the center server 100, the user of the other terminal 200 (the second terminal 200B) can start up the engine 30 of the vehicle 2.

In step S518, the pairing processing unit 1202 of the center server 100 transmits the pairing establishment notification to the second terminal 200B via the communication processing unit 1201.

At the same time, in step S520, the pairing processing unit 1202 of the center server 100 transmits a notification indicating that the pairing state has been released (a pairing release notification) to the first terminal 200A via the communication processing unit 1201.

In step S522, when the pairing establishment notification is received by the communication processing unit 2201B, the display controller 2202B of the second terminal 200B displays a remote startup operation screen on the display 240B (see FIG. 6).

On the other hand, in step S524, when the pairing release notification from the center server 100 is received by the communication processing unit 2201A, the display controller 2202A of the first terminal 200A displays a pairing release notification screen indicating the reception of the release notification on the display 240. Thus, since the pairing state between the first terminal 200A and the center server 100 is released, the first terminal 200A cannot transmit the startup request to the center server 100. Specifically, for example, in the terminal 200 (the first terminal 200A) of which the pairing state has not been established with the center server 100, the remote startup operation screen (see FIG. 6) cannot be displayed on the display 240, a virtual button for transmitting the startup request to the center server 100 is not displayed even when the remote startup operation screen can be displayed, or the button cannot be operated.

FIG. 7 is a diagram illustrating an example of the pairing release notification screen (a pairing release notification screen 700).

As illustrated in FIG. 7, a pop-up 710 is displayed in an upper area of the pairing release notification screen 700. Text information indicating that the startup of the engine 30 based on the startup request cannot be performed since the pairing state between the terminal 200 and the center server 100 is released is displayed in the pop-up 710.

A button 720 is displayed in a lower area of the pairing release notification screen 700 (the display 240). The button 720 is virtual operation means for returning from the screen to the home screen of the remote operation application. Specifically, text information "Return" is drawn.

Referring back to FIG. 5, in step S526, the remote operation unit 2203B of the second terminal 200B transmits a startup request including various pieces of setting content to the center server 100 via the communication processing unit 2201B according to a predetermined operation of the user with respect to the GUI.

In step S528, when the remote operation controller 1203 of the center server 100 receives the startup request from the second terminal 200B paired with the center server 100 using the communication processing unit 1201, the remote operation controller 1203 of the center server 100 transfers the received startup request to the vehicle 2 via the communication processing unit 1201.

In step S530, when the startup request from the center server 100 is received by the DCM 90, the remote operation assistance controller 402 of the vehicle 2 sends the engine startup request and the air conditioning startup request to the engine controller 401 and the air conditioner ECU 20 to start up the engine 30 and the air conditioning device 10.

In step S532, the remote operation assistance controller 402 of the vehicle 2 transmits a startup notification notifying that the engine 30 and the air conditioning device 10 have been started up to the center server 100 via the DCM 90.

In step S534, when the startup notification is received from the vehicle 2 via the communication processing unit 1201, the remote operation controller 1203 of the center server 100 transfers the startup notification to the second terminal 200B via the communication processing unit 1201.

Meanwhile, in step S536, when the end condition is satisfied after the startup of the engine 30, the remote operation assistance controller 402 of the vehicle 2 transmits an engine stop request and air conditioning stop request to the engine controller 401 and the air conditioner ECU 20 to stop the engine 30 and the air conditioning device 10.

In step S538, the remote operation assistance controller 402 of the vehicle 2 transmits a stop notification indicating that the engine 30 and the air conditioning device 10 are stopped to the center server 100 via the DCM 90.

In step S540, when the stop notification is received from the vehicle 2 via the communication processing unit 1201, the remote operation controller 1203 of the center server 100 transfers the stop notification to the second terminal 200B via the communication processing unit 1201.

### Operation

As described above, in the first embodiment, when the engine 30 is started up based on the startup request from one of the terminals 200 and being operated or when the engine 30 is likely to be started up, the remote startup system 1 prohibits the startup of the engine 30 based on the startup request from the other terminal 200 among the terminals 200.

More specifically, the remote operation unit 2203 of the terminal 200 transmits a pairing request for requesting a one-to-one connection between the center server 100 and the terminal 200 including the remote operation unit 2203 among the terminals 200 to the center server 100 via the communication processing unit 1201 according to a predetermined operation of the user with respect to the GUI. In response to the received pairing request, the pairing processing unit 1202 of the center server 100 establishes a one-to-one connection state between the center server 100 and solely one terminal 200 among the terminals 200 as a target. The remote operation controller 1203 of the center server 100 receives solely the startup request that is transmitted from the terminal 200 of which the connection state has been established with the center server 100 by the pairing processing unit 1202 among the terminals 200, to start up the engine 30.

As described above, the one-to-one pairing state is established between solely the terminal 200 among the terminals 200 and the center server 100 that controls the startup of the engine 30 based on the startup request. When pairing is established between a certain terminal 200 and the center server 100, a determination can be made that the startup of the engine 30 based on the startup request from the terminal 200 is actually performed and the engine 30 is being operated or the startup of the engine 30 is likely to be performed. Therefore, the startup request from one terminal 200 of which the pairing state has been established is accepted and the engine 30 is started up in response to the startup request, whereas a startup request from the other terminal 200 of which pairing has not been established is not accepted. Therefore, it is possible to suppress a situation in which the startup requests transmitted from the terminals 200 interfere on the reception side.

In the first embodiment, when a pairing request is received from the second terminal 200B among the terminals 200 in a situation in which the connection state between the first terminal 200A among the terminals 200 and the center server 100 is established, the pairing processing unit 1202 releases the pairing state between the first terminal 200A and the center server 100 and establishes the connection state between the second terminal 200B and the center server 100.

Thus, when the pairing request is transmitted from the second terminal 200B even in a case where the pairing state has already been established between the first terminal 200A and the center server 100, the paring state between the first terminal 200A and the center server 100 is released and the pairing state between the second terminal 200B and the center server 100 is established. Therefore, for example, in a case where a user different from the user of the first terminal 200A wishes to start up the engine 30 using the second terminal 200B, the user can start up the engine 30 using the second terminal 200B even in a state in which the pairing state between the first terminal 200A that has transmitted the pairing request and the center and the center server 100 is not released.

In the first embodiment, the remote operation unit 2203B of the second terminal 200B transmits an agreement notification indicating agreement on the release of the pairing state between the first terminal 200A and the center server 100 to the center server 100 via the communication processing unit 2201B together with or separately from the pairing request according to a predetermined operation of the user with respect to the GUI of the display 240B. When the pairing request and the agreement notification are received from the second terminal 200B, the pairing processing unit 1202 releases the pairing state between the first terminal 200A and the center server 100 and establishes the pairing state between the second terminal 200B and the center server 100.

Thus, when the pairing request is transmitted from the second terminal 200B even in a case where the pairing state has already been established between the first terminal 200A and the center server 100, agreement on the release of pairing of the first terminal 200A is obtained from the user of the second terminal 200B, the pairing state between the first terminal 200A and the center server 100 is released, and the pairing state between the second terminal 200B and the center server 100 is established. Therefore, since the user of the second terminal 200B agrees on the release of the pairing state between the first terminal 200A and the center server 100 and then causes pairing with the terminal (the second terminal 200B) of the user to be established, it is possible to suppress a situation in which pairing with the first terminal 200A is released against the intention of the user of the second terminal 200B.

The pairing state between the first terminal 200A and the center server 100 may be released and the pairing state between the second terminal 200B and the center server 100 may be established on the condition that an agreement notification of the first terminal 200A is received in the center server 100 instead of or in addition to the agreement notification of the second terminal 200B in response to the pairing request transmitted from the second terminal 200B to the center server 100. Thus, when the pairing request is transmitted from the second terminal 200B even in a case where the pairing state has already been established between the first terminal 200A and the center server 100, the agreement on release of pairing between the first terminal 200A and the center server 100 is obtained from the user of the first terminal 200A, the pairing of the first terminal 200A is released, and the pairing of the second terminal 200B is established. Therefore, it is possible to suppress a situation in which the pairing with the first terminal 200A is released against the intention of the user of the first terminal 200A. In this case, the center server 100 (the communication processing unit 1201) transmits a notification indicating that the pairing state between the first terminal 200A and the center server 100 is scheduled to be released (a release schedule notification) to the first terminal 200A when the pairing request from the terminal 200 (the second terminal 200B) is received and the pairing state between the other terminal 200 (the first terminal 200A) and the center server 100 has already been established. When the release schedule notification is received from the center server 100, the terminal 200 may display a notification screen indicating the reception of the release schedule notification on the display 240 and display an operation portion (GUI) for the user agreeing on the release of the pairing state between the terminal 200 (the first terminal 200A) and the center server 100 in the notification screen. Thus, the user of the first terminal 200A can agree on the release on the fact that the pairing state between the first terminal 200A and the center server 100 is released through a predetermined operation with respect to the GUI, and the first terminal 200A can transmit an agreement notification related to content of the agreement to the center server 100. The user of the first terminal 200A may not agree the release, that is, may permit release of the pairing state between the first terminal 200A and the center server 100, and reflect the intention of the user of the first terminal 200A.

A configuration in which the user of the first terminal 200A and the user of the second terminal 200B may perform conversation, for example, through bidirectional transmission of messages via the center server 100 instead of the agreement notification may be adopted. Thus, the users of the first and second terminals 200A, 200B can decide which of the pairing states is prioritized based on the conversion, and the user of the first terminal 200A can perform an operation of voluntarily releasing the pairing state or the user of the second terminal 200B can perform an operation of withdrawing the pairing request. In this case, the terminal 200 may be configured to receive a message in a message input box in the GUI according to the predetermined operation of the user with respect to the GUI of the display 240, and transmit the input message to the center server 100 with the other terminal 200 as a destination may be adopted. The center server 100 may transfer the message transmitted from the terminal 200 to the other terminal 200 as the destination included in the message.

Although the pairing processing unit 1202 (including the function of the communication processing unit 1201 based on the request from the pairing processing unit 1202) is provided in the center server 100 in the first embodiment, the pairing processing unit 1202 may be provided in the vehicle 2. That is, although the connection target of pairing established with the terminal 200 is the center server 100 in the first embodiment, the connection target may be the vehicle 2. In this case, the center server 100 has a relaying function of transferring the pairing request, the agreement notification, and the like transmitted from the terminal 200 to the vehicle 2 with the vehicle 2 as a destination, and also transferring, to the terminal 200, various notifications transmitted from the vehicle 2 with one of the terminals 200 as a destination.

Although the function of the remote operation controller 1203 (including the function of the communication processing unit 1201 based on the request from the remote operation controller 1203), that is, a function of overall control regarding the startup of the engine 30 based on the startup request is provided in the center server 100 in the first embodiment, the function may be provided in the vehicle 2.

### Second Embodiment

Next, a second embodiment will be described.

A remote startup system 1 according to the second embodiment is different from that according to the first embodiment in that a right assignment unit 1204 is provided instead of the pairing processing unit 1202. Hereinafter, the same or corresponding components as or to those of the first embodiment are denoted with the same reference numerals, and different parts will be mainly described.

### Configuration of Remote Startup System

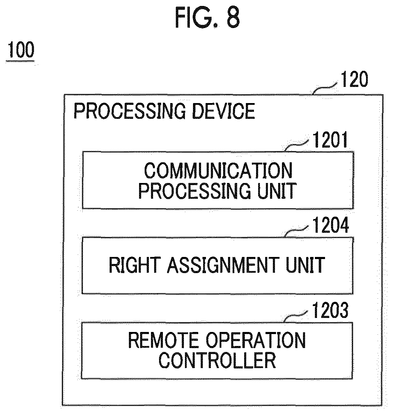

First, a configuration of the remote startup system 1 according to the second embodiment will be described with reference to FIG. 8.

FIG. 8 is a functional block diagram illustrating an example of a functional configuration of the center server 100 (the processing device 120) according to the second embodiment.

Each of an overall configuration of the remote startup system 1, a functional configuration of the vehicle 2, and a functional configuration of the terminal 200 is illustrated in FIGS. 1, 2, and 4, as in the first embodiment.

The center server 100 includes a communication device 110 and a processing device 120, as in the first embodiment.

The processing device 120 includes, for example, a communication processing unit 1201, a remote operation controller 1203, and a right assignment unit 1204 as functional units that are realized by executing one or more programs stored in the ROM or the auxiliary storage device on the CPU.

The right assignment unit 1204 permits login of solely one terminal 200 among the terminals 200 as a target to the center server 100 in response to a login request (an example of a right request) transmitted from the terminal 200, and assigns a right to perform the startup of the engine 30 based on the startup request (a remote startup right). Accordingly, since the other terminal 200 to which the remote startup right has not been assigned cannot transmit the startup request to the center server 100, it is possible to prevent the startup request from being transmitted from the terminals 200 to the center server 100 at the same timing. That is, it is possible to avoid a situation in which the startup requests interfere on the reception side (the center server 100).

The right assignment unit 1204 logs out the terminal 200 in response to the logout request transmitted from the terminal 200 to which the remote startup right has already been assigned (that is, the terminal 200 that has already logged in to the center server 100) to release the assignment of the remote startup right to the terminal 200.

The remote operation controller 1203 (an example of a controller) performs control regarding the startup of the engine 30 based on the startup request received from the terminal 200 by the communication processing unit 1201. For example, when the startup request from the terminal 200 to which the remote startup right has been assigned (that is, that has been logged in to the center server 100) among the terminals 200 is received by the communication processing unit 1201, the remote operation controller 1203 transmits the startup request to the vehicle 2 via the communication processing unit 1201 to start up the engine 30 and the air conditioning device 10.

The terminal 200 includes a communication device 210 and a processing device 220, As in the first embodiment.

The processing device 220 includes, for example, a communication processing unit 2201, a display controller 2202, and a remote operation unit 2203 as functional units that are realized by executing one or more programs stored in a ROM, an auxiliary storage device, or the like on the CPU.

The remote operation unit 2203 executes various types of processing regarding the remote operation of the engine 30 and the air conditioning device 10 according to a predetermined operation of the user with respect to a predetermined GUI displayed on the display 240 by the display controller 2202, as in the first embodiment. The above function is available, for example, by activating the remote startup application according to a predetermined operation of the user, as in the first embodiment.

For example, the remote operation unit 2203 transmits various signals related to the remote operation of the vehicle 2 including a login request and a logout request for requesting assignment and release of the remote startup right, the startup request for requesting the startup of the engine 30 and the air conditioning device 10, or the like to the center server 100 via the communication processing unit 2201 according to a predetermined operation of the user with respect to various GUIs displayed on the display 240 due to the activation of the remote operation application. For example, the user can perform various settings when the air conditioning device 10 is operated on the predetermined GUI, and the remote operation unit 2203 transmits various signals such as a startup request including the various settings to the center server 100.

### Detailed Operation of Remote Startup System

Next, the specific operation of the remote startup system 1 according to the second embodiment will be described with reference to FIGS. 9 to 11.

FIG. 9 is a sequence diagram schematically illustrating an example of the operation of the remote startup system 1 according to the second embodiment. Specifically, this is a specific example of the operation of the remote startup system 1 in a case where the first and second terminals 200A, 200B are registered in advance as the terminals 200 capable of remotely operating the vehicle 2.

It is assumed that there is no terminal 200 logged in the center server 100 before start of the operation according to this example. Hereinafter, the same applies to FIG. 12 to be described below.

In step S902, the first terminal 200A activates the remote operation application according to a predetermined operation of the user with respect to the GUI that is displayed on the display 240 by the display controller 2202.

In step S904, the remote operation unit 2203A of the first terminal 200A transmits a login request to the center server 100 via the communication processing unit 2201A (an example of a right request transmission unit) according to a predetermined operation of the user with respect to the GUI of the display 240A. The login request includes an identifier (ID) which is an identifier unique to the first terminal 200A or the user of the first terminal 200A and a password associated with the ID, that are input according to a predetermined operation of the user with respect to the GUI of the display 240A.

In step S906, when the login request from the first terminal 200A is received by the communication processing unit 1201, the right assignment unit 1204 of the center server 100 performs authentication based on the ID and the password, permits login to the center server 100 of the first terminal 200A, and assigns a remote startup right since there is no logged-in terminal 200.

In step S908, when the login (assignment of the remote startup right) of the first terminal 200A is completed, the right assignment unit 1204 of the center server 100 transmits a notification indicating that the login has been completed (a login completion notification) to the first terminal 200A via the communication processing unit 1201.

In step S910, when the login completion notification from the center server 100 is received by the communication processing unit 2201A, the display controller 2202A of the first terminal 200A displays a remote startup operation screen for performing various operations regarding the remote operation of the vehicle 2 including transmission of the startup request to the center server 100 on the display 240A. Thus, when the login of the first terminal 200A to the center server 100 is completed, the remote startup operation screen is automatically displayed on the display 240A. Therefore, the operation for displaying the remote startup operation screen on the display 240 is not needed, and convenience for the user can be improved.

A configuration in which the remote startup operation screen can be displayed on the display 240 of the terminal 200 for the first time in a case where the login of the terminal 200 to the center server 100 is completed may be adopted. Accordingly, since the startup request cannot be transmitted from the terminal 200 that has not logged in to the center server 100, it is possible to further suppress interference due to transmission of the startup request from the terminals 200 to the center server 100 at the same timing.

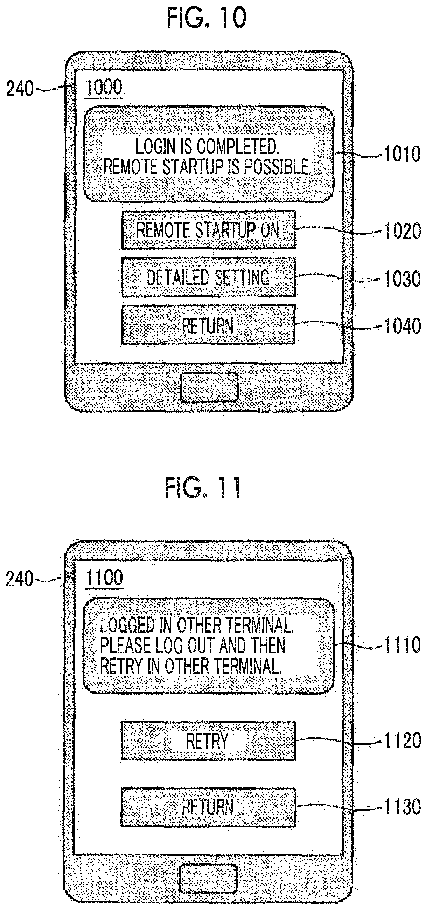

For example, FIG. 10 is a diagram illustrating an example (a remote startup operation screen 1000) of the remote startup operation screen according to the second embodiment.

As illustrated in FIG. 10, a pop-up 1010 is displayed in an upper area of the remote startup operation screen 1000 of the display 240. Text information indicating that the startup of the engine 30 based on the transmission of the startup request to the center server 100 can be performed since the login of the terminal 200 to the center server 100 has been completed is displayed on the pop-up 1010.

Virtual buttons 1020 to 1040 for accepting an operation of the user are displayed side by side in a vertical direction from a vertical central area to a lower area of the remote startup operation screen 1000. Since the buttons 1020 to 1040 have the same function as the buttons 620 to 640 in FIG. 6 of the first embodiment, description thereof will be omitted.

Referring back to FIG. 9, in a situation in which the first terminal 200A logs in to the center server 100 and the startup of the engine 30 based on the startup request is not performed (the engine 30 is not operated), the second terminal 200B activates the remote operation application according to a predetermined operation of the user with respect to the GUI that is displayed on the display 240B by the display controller 2202B in step S912.

In step S914, the remote operation unit 2203B of the second terminal 200B transmits the login request to the center server 100 via the communication processing unit 2201B (an example of a right request transmission unit) according to a predetermined operation of the user with respect to the GUI of the display 240B. As described above, the login request includes an identifier (ID) unique to the second terminal 200B or the user of the second terminal 200B, and a password associated with the ID.

In step S916, when the login request from the second terminal 200B is received by the communication processing unit 1201, the right assignment unit 1204 of the center server 100 determines transmits a retry request to the second terminal 200B to request the second terminal 200B to transmit the login request afterward via the communication processing unit 1201 (an example of a retry request transmission unit) since the first terminal 200A has already logged in to the center server 100.

In step S918, when the retry request from the center server 100 is received by the communication processing unit 2201B, the display controller 2202B of the second terminal 200B displays a notification screen for notifying the user of content of the retry request (retry request notification screen) on the display 240B.

For example, FIG. 11 is a diagram illustrating an example (a retry request notification screen 1100) of the retry request notification screen according to the second embodiment.

As illustrated in FIG. 11, a pop-up 1110 is displayed in an upper area of the retry request notification screen 1100 of the display 240. Text information for requesting transmission of a login request again after another terminal 200 logs out since the other terminal 200 is logged in to the center server 100 is displayed in the pop-up 1110.

Buttons 1120 and 1130 are arranged side by side in a vertical direction from a vertical central area to a lower area of the retry request notification screen 1100.

The button 1120 is virtual operation means for transmitting the login request to the center server 100 again. Specifically, text information "Retry" is drawn.

The button 1130 is virtual operation means for returning from the screen to a home screen of the remote operation application. Specifically, text information "Return" is drawn.

Referring back to FIG. 9, on the other hand, in step S920, the remote operation unit 2203 of the first terminal 200A transmits a logout request to the center server 100 via the communication processing unit 2201A according to a predetermined operation of the user with respect to the GUI of the display 240A.

In step S922, when the logout request from the first terminal 200A is received by the communication processing unit 1201, the right assignment unit 1204 of the center server 100 performs a logout process for the first terminal 200A, and releases the remote startup right assigned to the first terminal 200A.

After the logout process for the first terminal 200A, the remote operation unit 2203 of the second terminal 200B transmits a login request to the center server 100 via the communication processing unit 2201B according to a predetermined operation of the user with respect to the GUI of the display 240B, for example, an operation of the button 1120 in FIG. 11 described above in step S924.

In step S926, when the login request from the second terminal 200B is received by the communication processing unit 1201B, the right assignment unit 1204 of the center server 100 permits login of the second terminal 200B to the center server 100 and assigns a remote startup right since there is no logged-in terminal 200.

In step S928, when the login (assignment of the remote startup right) of the second terminal 200B is completed, the right assignment unit 1204 of the center server 100 transmits a notification indicating that the login has been completed (a login completion notification) to the second terminal 200B via the communication processing unit 1201.

In step S930, when the login completion notification from the center server 100 is received by the communication processing unit 2201B, the display controller 2202B of the second terminal 200B displays the remote startup operation screen (see FIG. 10) on the display 240B.

Since steps S932 to S946 are the same as steps S526 to S540 of FIG. 5 in the first embodiment, description thereof will be omitted.

### Operation

As described above, in the second embodiment, when the engine 30 is started up based on the startup request from one of the terminals 200 and being operated or when the engine 30 is likely to be started up, the remote startup system 1 prohibits the startup of the engine 30 based on the startup request from the other terminal 200 among the terminals 200.

Specifically, the remote operation unit 2203 of the terminal 200 transmits the login request for requesting the assignment of a right to perform the startup of the engine 30 based on the startup request to the center server 100 that is a request target via the communication processing unit 2201 according to the predetermined operation of the user with respect to the GUI of the display 240. The right assignment unit 1204 of the center server 100 that is a request target assigns a right to solely one terminal 200 among the terminals 200 as a target according to the right request that is transmitted from the terminals 200.

Thus, the right to perform startup of the engine 30 is assigned solely to one terminal 200. When the right is assigned to the predetermined terminal 200, a determination can be made that the startup of the engine 30 based on the startup request from the terminal 200 is actually performed, and the engine 30 is being operated or the engine 30 is likely to be started up. Therefore, when the right has already been assigned to one terminal 200, another terminal 200 to which the right is not assigned cannot perform startup of the engine 30 based on the startup request, that is, the startup of the engine 30 based on the startup request from the other terminal 200 is prohibited. Since the right to perform the startup of the engine 30 based on the startup request (a remote startup right), that is, a right to transmit the startup request is assigned solely to one terminal 200 and is not assigned to the other terminals 200, the startup request is not initially transmitted from the terminals 200 at the same timing. Therefore, it is possible to suppress a situation in which the startup requests transmitted from the terminals 200 interfere on the reception side.

In the second embodiment, in a case where the right is assigned to the first terminal 200A among the terminals 200, the right assignment unit 1204 of the center server 100 transmits a retry request for requesting ex-post retransmission of the login request to the second terminal 200B when the login request is transmitted from the second terminal 200B among the terminals 200. When the retry request is received, a notification screen indicating a request for ex-post retransmission of the login request (a retry request notification screen) is displayed on the display 240B of the second terminal 200B under the control of the display controller 2202B.

As described above, when a right request is transmitted from the second terminal 200B in a state in which the right has already been assigned to the first terminal 200A, a notification for requesting a retry of the transmission of the right request afterward is displayed on the display 240 of the second terminal 200B. Therefore, in a case where the user of the second terminal 200B wishes to start up the engine 30 later in a state in which the right has already been assigned to the first terminal 200A, the user of the second terminal 200B can be notified in advance that the remote startup right for the engine 30 cannot be assigned.

In the second embodiment, a function of transmitting the startup request in the second terminal 200B, that is, the remote operation application is activated instead of or additionally when the login request is transmitted from the second terminal 200B, a retry request may be transmitted to the second terminal 200B when the remote operation application is activated. In this case, the second terminal 200B transmits the activation notification to the center server 100 in response to the activation of the remote operation application, such that the center server 100 can recognize the activation of the remote operation application in the second terminal 200B.

Although the right assignment unit 1204 (including the function of the communication processing unit 1201 based on the request from the right assignment unit 1204) is provided in the center server 100 in the second embodiment, the right assignment unit 1204 may be provided in the vehicle 2. That is, although a request target of right assignment from the terminal 200 is the center server 100 in the second embodiment, the request target may be the vehicle 2. In this case, the center server 100 has a relaying function of transferring, to the vehicle 2, the login request or the like transmitted from the terminal 200 to the vehicle 2 serving as a destination, and also transferring a retry request, various notifications, or the like transmitted from the vehicle 2 to any one of the terminals 200 serving as a destination to the terminal 200.

Although the function of the remote operation controller 1203 (including the function of the communication processing unit 1201 based on the request from the remote operation controller 1203), that is, the function of overall control regarding the startup of the engine 30 based on the startup request is provided in the center server 100 in the second embodiment, the function may be provided in the vehicle 2.

### Third Embodiment

Next, a third embodiment will be described.

A remote startup system 1 according to the third embodiment is different from that according to the first embodiment in that the center server 100 (the processing device 120) includes a right assignment unit 1204 as in the second embodiment. The remote startup system 1 according to the third embodiment is different from that according to the second embodiment in that the remote startup right is assigned to the plurality of terminals 200 by the right assignment unit 1204. Hereinafter, the same or corresponding configurations as or to those of the first embodiment and the second embodiment are denoted with the same reference numerals, and different parts will be mainly described.

### Configuration of Remote Startup System

First, a configuration of the remote startup system 1 according to the third embodiment will be described.

An overall configuration of the remote startup system 1, a functional configuration of the vehicle 2, a functional configuration of the center server 100 (the processing device 120), and a functional configuration of the terminal 200 are the same as those of the second embodiment, and are illustrated in FIGS. 1, 2, 8, and 4, similar to the second embodiment.

As in the first embodiment and the second embodiment, the center server 100 includes a communication device 110 and a processing device 120.

The processing device 120 includes a communication processing unit 1201, a remote operation controller 1203, and a right assignment unit 1204 as functional units that are realized by executing one or more programs stored in the ROM or the auxiliary storage device on the CPU, as in the second embodiment.

When a login request from the terminal 200 is received by the communication processing unit 1201, the right assignment unit 1204 permits the login of the terminal 200 that is a transmission source of the login request to the center server 100 and assigns the remote startup right. That is, the right assignment unit 1204 assigns the remote startup right to the respective terminals 200 that are transmission sources without limit according to the received login request as long as IDs and passwords transmitted from the respective terminals 200 are authorized, unlike the second embodiment.

In response to a logout request transmitted from the terminal 200 to which the remote startup right has already been assigned (that is, the terminal 200 that has already logged in to the center server 100), the right assignment unit 1204 logs out the terminal 200 and releases the assignment of the remote startup right to the terminal 200.

The remote operation controller 1203 (an example of a controller) controls the startup of the engine 30 based on the startup request received from the terminal 200 by the communication processing unit 1201. For example, the remote operation controller 1203 transmits a startup request to the vehicle 2 via the communication processing unit 1201 based on a startup request from the terminal 200 to which the remote startup right has been assigned (that is, logged in to the center server 100), which is received by the communication processing unit 1201, to start up the engine 30 and the air conditioning device 10. For example, based on the startup request from one of the terminals 200 to which the remote startup right has been assigned, the remote operation controller 1203 prohibits the startup of the engine 30 based on the startup request from the other terminal 200 when the engine 30 is started up and being operated or when the engine 30 is likely to be started up. Examples of a case where the engine 30 is likely to be started up include a time immediately after the startup request is transmitted from one terminal 200, and a situation in which, for example, a timer for starting up the engine 30 after a predetermined time is set as set content of the startup request. Thus, even in a case where the remote startup right is assigned to the terminals 200, it is possible to suppress a situation in which the startup requests transmitted from the terminals 200 interfere in the center server 100 (reception side).

### Detailed Operation of Remote Startup System

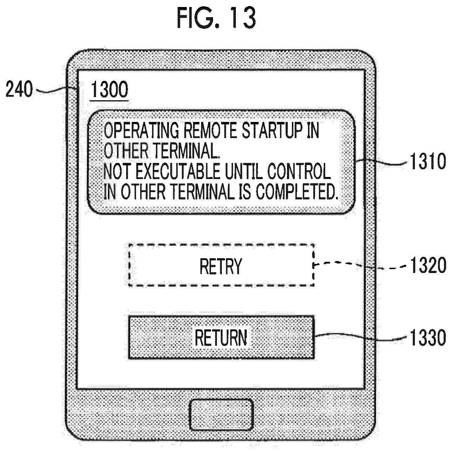

Next, a specific operation of the remote startup system 1 according to the third embodiment will be described with reference to FIGS. 12 and 13.

FIG. 12 is a sequence diagram schematically illustrating an example of the operation of the remote startup system 1 according to the third embodiment. Specifically, this is a specific example of the operation of the remote startup system 1 in a case where the first and second terminals 200A, 200B are registered in advance as terminals 200 capable of remotely operating the vehicle 2.

Since the processes of steps S1202 to S1214 are the same as the processes of steps S902 to S914 in FIG. 9 in the second embodiment, description thereof will be omitted.

In step S1216, when the login request from the second terminal 200B is received by the communication processing unit 1201, the right assignment unit 1204 of the center server 100 performs authentication with the ID and the password, permits the login of the second terminal 200B to the center server 100, and assigns a remote startup right. Thus, both the first terminal 200A and the second terminal 200B are in a state in which the remote startup right is assigned.

In step S1218, when the login (assignment of the remote startup right) of the second terminal 200B is completed, the right assignment unit 1204 of the center server 100 transmits a login completion notification to the second terminal 200B via the communication processing unit 1201.

In step S1220, when the login completion notification from the center server 100 is received by the communication processing unit 2201B, the display controller 2202B of the second terminal 200B displays the remote startup operation screen (see FIG. 10) on the display 240B.

In step S1222, the remote operation unit 2203A of the first terminal 200A among the first and second terminals 200A, 200B to which the remote startup right has been assigned transmits the startup request to the center server 100 via the communication processing unit 2201A according to a predetermined operation of the user with respect to the GUI of the display 240A.

Since steps S1224 and S1226 are the same as steps S528 and S530 of FIG. 5 in the first embodiment, description thereof will be omitted.

In a situation in which the engine 30 is started up and being operated based on the startup request from the first terminal 200A, the remote operation unit 2203B of the second terminal 200B transmits the startup request to the center server 100 via the communication processing unit 2201B according to the predetermined operation of the user with respect to the GUI of the display 240 in step S1228.

In step S1230, when the remote operation controller 1203 of the center server 100 receives the startup request from the second terminal 200B using the communication processing unit 1201, the remote operation controller 1203 of the center server 100 discards the startup request from the second terminal 200B since the engine 30 is started up and being operated based on the startup request from the first terminal 200A. The remote operation controller 1203 transmits a notification indicating that the startup operation of the engine 30 of the vehicle 2 based on the startup request is not permitted (an operation non-permission notification) to the second terminal 200B via the communication processing unit 1201 (an example of an operation non-permission notification transmission unit).

In step S1232, when the operation non-permission notification from the center server 100 is received by the communication processing unit 2201B, the display controller 2202B of the second terminal 200B displays a notification screen for reception of the operation non-permission notification (an operation non-permission notification screen) on the display 240.

Even in a case where the engine 30 is likely to be started up based on the startup request from the first terminal 200A, an operation non-permission notification may be transmitted from the center server 100 to the first terminal 200A, and the operation non-permission notification screen may be displayed on the display 240 of the second terminal 200B, as in this example.

For example, FIG. 13 is a diagram illustrating an example (an operation non-permission notification screen 1300) of the operation non-permission notification screen.

As illustrated in FIG. 13, a pop-up 1310 is displayed in an upper area of the operation non-permission notification screen 1300 of the display 240. Text information indicating that the startup operation of the engine 30 based on the startup request cannot be executed until the startup control is completed since the startup control of the engine 30 based on the startup request from the other terminal 200 (the first terminal 200A) is continued is drawn in the pop-up 1310.

Buttons 1320, 1330 are arranged in a vertical direction from a vertical central area to a lower area of the operation non-permission notification screen 1300.

The button 1320 is virtual operation means for transmitting the startup request to the center server 100 again. Specifically, text information "Retry" is drawn. However, in the operation non-permission notification screen 1300, the button 1320 is displayed in a state in which the button 1320 is drawn but does not respond even when a portion corresponding to the button 1320 in the touch panel type display 240 is touched, that is, cannot be operated. Thus, when the engine 30 is started up and being operated based on the startup request from the first terminal 200A or when the engine 30 is likely to be started up, it is possible to prevent the startup request from being transmitted from the second terminal 200B to the center server 100.

An aspect in which the button 1320 is not displayed (non-displayed) may be adopted, and the same advantageous effects can be obtained.

The button 1330 is virtual operation means for returning from the screen to the home screen of the remote operation application. Specifically, text information "Return" is drawn.

Referring back to FIG. 13, since steps S1234 to S1240 are the same as steps S532 to S538 of FIG. 5 in the first embodiment, description thereof will be omitted.

In step S1242, when the remote operation controller 1203 of the center server 100 receives a stop notification indicating that the engine 30 or the like has been stopped from the vehicle 2 using the communication processing unit 1201, the remote operation controller 1203 transmits a stop notifications to both the first and second terminals 200A, 200B to which the remote operation right has been assigned via the communication processing unit 1201. Thus, not only the user of the first terminal 200A that has transmitted the startup request serving as a trigger of startup of the engine 30 but also the user of the second terminal 200B can recognize that the engine 30 or the like has been stopped.

In step S1244, the remote operation unit 2203B of the second terminal 200B transmits the startup request to the center server 100 via the communication processing unit 1201B according to a predetermined operation with respect to the GUI of the display 240 from the user who has recognized that the engine 30 has been stopped. Thus, since the startup control of the engine 30 or the like based on the startup request from the first terminal 200A is stopped, the user of the second terminal 200B can start up the engine 30 or the like using the second terminal 200B.

Since the processes of steps S1246 and S 1248 are the same as the processes of steps S1224 and S 1226, description thereof will be omitted.

The processes of steps S1234 to S1242 corresponding to the startup of the engine 30 and the air conditioning device 10 through the process of step S1248 are not illustrated.

### Operation

In the third embodiment, when the engine 30 is started up and being operated based on the startup request from one terminal 200 among the terminals 200 or when the engine 30 is likely to be started up, the remote startup system 1 prohibits the startup of the engine 30 based on the startup request from the other terminal 200 among the terminals 200.

Specifically, the remote operation unit 2203 of the terminal 200 transmits the login request for requesting the assignment of a right to perform the startup of the engine 30 based on the startup request to the center server 100 via the communication processing unit 2201 (an example of a right request transmission unit) according to the predetermined operation of the user with respect to the GUI of the display 240. When the right request is received by the communication processing unit 1201, the right assignment unit 1204 of the center server 100 assigns a right to the terminal 200 that is a transmission source of the right request. The remote operation controller 1203 prohibits the startup of the engine 30 based on the startup request transmitted from the other terminal 200 to which the remote startup right has been assigned among the terminals 200 when the engine 30 is started up and being operated based on the startup request from the one terminal 200 to which the remote startup right has been assigned among the terminals 200 or when the engine 30 is likely to be started up.

Accordingly, in a situation in which the engine 30 is started up and being operated according to the startup request from one terminal 200 to which the right to perform the startup of the engine 30 has been assigned, or a situation in which the engine 30 is likely to be started up immediately after the startup request has been transmitted, the startup of the engine 30 based on the startup request from the other terminal 200 to which the right has been assigned can be prohibited. Therefore, it is possible to suppress a situation in which the startup requests transmitted from the terminals 200 interfere on the reception side. It is needed to assign the right to the terminal 200 in advance in order to start up the engine 30, and it is possible to limit the terminal 200 itself that is a transmission target of the startup request. Accordingly, it is possible to suppress a situation in which the startup requests transmitted from the terminals 200 interfere on the reception side. Since the remote startup right itself can be assigned to the terminals 200, it is not needed to wait for an order of right assignment, and convenience for the user can be improved. That is, suppression of interference on the reception side of the startup requests transmitted from the terminals 200 and convenience for the user can be both achieved.

In the third embodiment, the remote operation controller 1203 of the center server 100 transmits a non-permission notification (an operation non-permission notification) indicating that the startup of the engine 30 based on the startup request is not permitted to the other terminal 200 to which the remote startup right has been assigned via the communication processing unit 1201 when the engine 30 is started up and being operated based on the startup request from one terminal 200 to which the remote startup right has been assigned or when the engine 30 is likely to be started up. When the operation non-permission notification from the center server 100 is received by the communication processing unit 1201, an indication that the startup of the engine 30 based on the startup request is not permitted is displayed, and an operation portion (the button 1320) for transmitting the startup request to the center server 100 is not displayed or is displayed in a state in which the button cannot be operated on the operation screen of the display 240 of the terminal 200.

Thus, in a case where the engine 30 is started up and being operated due to the startup request from one terminal 200 to which the right to perform the startup of the engine 30 has been assigned, or when the engine 30 is likely to be started up, an operation portion such as a virtual button for transmitting a startup request on the operation screen of the other terminal 200 is in a non-display state or an operation disabled state. Therefore, since the transmission of an unnecessary startup request can be suppressed, it is possible to further suppress a situation in which the startup requests transmitted from the terminals 200 interferes in the center server 100 on the reception side.

Although the right assignment unit 1204 (including the function of the communication processing unit 1201 based on the request from the right assignment unit 1204) is provided in the center server 100 in the third embodiment, the right assignment unit 1204 may be provided in the vehicle 2. That is, although a request target of right assignment from the terminal 200 is the center server 100 in the third embodiment, the request target may be the vehicle 2. In this case, the center server 100 has a relaying function of transferring, to the vehicle 2, the login request or the like transmitted from the terminal 200 to the vehicle 2 serving as a destination, and also transferring various notifications or the like transmitted from the vehicle 2 to any one of the terminals 200 serving as a destination to the terminal 200.

Although the function of the remote operation controller 1203 (including the function of the communication processing unit 1201 based on the request from the remote operation controller 1203), that is, the function of overall control regarding the startup of the engine 30 based on the startup request is provided in the center server 100 in the third embodiment, the function may be provided in the vehicle 2.

Although the modes for carrying out the present invention has been described in detail above, the present invention is not limited to the specific embodiments described above, and various modifications and changes can be made within the scope of the gist of the present invention described in the claims.

For example, although the engine 30 serving as the driving device that drives the air conditioning device 10 (the compressor) is a startup target in the embodiments described above, another driving device may be the startup target. For example, in a case where the vehicle 2 is an electric vehicle, an electric compressor, specifically, an electric motor (another example of the driving device) built into the electric compressor may be the startup target.

## Claims

1. A remote startup system (1) comprising:
a first terminal (200A);
a second terminal (200B);
a center server (100) configured to communicate with each of the first terminal (200A) and the second terminal (200B) and receive a startup request from each of the first terminal (200A) and the second terminal (200B); and
a vehicle (2) on which a driving device is mounted, the vehicle (2) being configured to communicate with the center server (100), receive a startup request from the center server (100), and start up the driving device,
wherein the remote startup system (1) is configured to prohibit startup of the driving device based on a startup request from the second terminal (200B) when the driving device is started up and being operated based on the startup request from the first terminal (200A) or when the driving device is likely to be started up based on the startup request from the first terminal (200A).

2. The remote startup system (1) according to claim 1, wherein:
each of the first terminal (200A) and the second terminal (200B) includes a pairing request transmission unit configured to transmit a pairing request for requesting a one-to-one connection between a connection target of a predefined one of the center server (100) and the vehicle (2) and a terminal including the pairing request transmission unit among the first terminal (200A) and the second terminal (200B) to the center server (100) with the connection target as a destination;
one of the center server (100) and the vehicle (2) corresponding to the connection target includes a pairing establishment unit configured to establish a one-to-one connection state with the connection target with solely one of the terminal (200A) and the second terminal (200B) as a target according to the received pairing request; and
the center server (100) or the vehicle (2) includes a controller configured to accept solely the startup request transmitted from a terminal of which the connection state with the connection target is established by the pairing establishment unit among the first terminal (200A) and the second terminal and start up the driving device.

3. The remote startup system (1) according to claim 2, wherein the pairing establishment unit is configured to release the connection state between the first terminal (200A) and the connection target and establish the connection state between the second terminal (200B) and the connection target when the pairing request is received from the second terminal (200B) in a situation in which the connection state between the first terminal (200A) and the connection target is established.

4. The remote startup system (1) according to claim 3, wherein:
the pairing request transmission unit is configured to transmit an agreement notification indicating agreement on release of the connection state between the first terminal (200A) and the connection target to the center server (100) together with or separately from the pairing request according to a predetermined operation of a user; and
the pairing establishment unit is configured to release the connection state between the first terminal (200A) and the connection target and establish the connection state between the second terminal (200B) and the connection target when the pairing request and the agreement notification are received from the second terminal (200B).

5. The remote startup system (1) according to claim 3, wherein:
one of the center server (100) and the vehicle (2) corresponding to the connection target includes a release schedule notification transmission unit configured to transmit a release schedule notification indicating the connection state between the first terminal (200A) and the connection target is scheduled to be released, to the first terminal (200A) or the center server (100) with the first terminal (200A) as a destination, the notification of the release schedule notifying that the connection state is to be released when the pairing request is transmitted from the second terminal (200B) to the center server (100) with the connection target as a destination in a situation in which the connection state between the first terminal (200A) and the connection target is established;
each of the first terminal (200A) and the second terminal (200B) includes a display unit configured to display an operation screen for allowing a user to agree on release of the connection state between the first terminal (200A) including the display unit and the connection target when the release schedule notification is received;
each of the first terminal (200A) and the second terminal (200B) includes an agreement notification transmission unit configured to transmit an agreement notification indicating agreement on release of the connection state to the center server (100) with the connection target as a destination when an operation of agreeing on release of the connection state between the first terminal (200A) including the agreement notification transmission unit and the connection target is performed in the operation screen; and
the pairing establishment unit is configured to release the connection state between the first terminal (200A) and the connection target and establish the connection state between the second terminal (200B) and the connection target when the agreement notification is received from the first terminal (200A).

6. The remote startup system (1) according to claim 1, wherein:
each of the first terminal (200A) and the second terminal (200B) includes a right request transmission unit configured to transmit a right request for requesting assignment of a right to perform the startup of the driving device based on the startup request to the center server (100) with a request target of predefined one of the center server (100) and the vehicles (2) as a destination; and
the request target among the center server (100) and the vehicle (2) includes a right assignment unit configured to assign a right to solely one of the first terminal (200A) and the second terminal (200B) as a target in response to a right request transmitted from the first terminal (200A) and the second terminal (200B).

7. The remote startup system (1) according to claim 6, wherein:
the center server (100) or the vehicle (2) includes a retry request transmission unit configured to transmit a retry request for requesting an ex-post retransmission of the right request to the second terminal (200B) or the center server (100) with the second terminal (200B) as a destination when a right request is transmitted from the second terminal (200B) or when a function for transmitting the startup request is activated in the second terminal (200B) in a case where a right is assigned to the first terminal (200A) by the right assignment unit; and
each of the first terminal (200A) and the second terminal (200B) includes a display unit that is configured to display a notification for requesting an ex-post retransmission of the right request when the retry request is received.

8. The remote startup system (1) according to claim 1, wherein:
each of the first terminal (200A) and the second terminal (200B) includes a right request transmission unit configured to transmit a right request for requesting assignment of a right to perform the startup of the driving device based on the startup request to the center server (100) with a request target of predefined one of the center server (100) and the vehicles (2) as a destination;
one of the center server (100) and the vehicle (2) corresponding to the request target includes a right assignment unit configured to assign a right to a terminal that is a transmission source of the right request among the first terminal (200A) and the second terminal (200B) when the right request is received;
the center server (100) or the vehicle (2) includes a controller configured to start up the driving device based on the startup request received from a terminal to which the right is assigned by the right assignment unit among the first terminal (200A) and the second terminal (200B); and
the controller is configured to prohibit the startup of the driving device based on the startup request transmitted from the other terminal to which the right is assigned by the right assignment unit among the first terminal (200A) and the second terminal (200B) when the driving device is started up and being operated based on a startup request from one of the first terminal (200A) and the second terminal (200B) to which the right is assigned by the right assignment unit or when the driving device is likely to be started up.

9. The remote startup system (1) according to claim 8, wherein:
the center server (100) or the vehicle (2) includes a non-permission notification transmission unit configured to transmit a non-permission notification indicating that the startup of the driving device based on the startup request is not permitted to the other terminal or the center server (100) with the other terminal to which the right has been assigned by the right assignment unit among the first terminal (200A) and the second terminal (200B) as a destination, when the driving device is started up and being operated based on the startup request from the one terminal to which the right has been assigned by the right assignment unit among the first terminal (200A) and the second terminal (200B) or when the driving device is likely to be started up;
each of the first terminal (200A) and the second terminal (200B) includes a display unit configured to display an operation screen including an operation portion for transmitting the startup request to the center server (100); and
when the non-permission notification is received, an indication that the startup of the driving device based on the startup request is not permitted is displayed, and the operation portion is not displayed or is displayed in a state in which the operation portion is not operated on the operation screen of the display unit.

10. A center server (100) configured to communicate with each of a first terminal (200A), a second terminal (200B), and a vehicle (2), receive a startup request transmitted from each of the first terminal (200A) and the second terminal (200B), and start up a driving device mounted on the vehicle (2) based on the startup request, wherein the center server (100) is configured to prohibit startup of the driving device based on a startup request from the other terminal among the first terminal (200A) and the second terminal (200B) when the driving device is started up and being operated based on the startup request from one of the first terminal (200A) and the second terminal (200B) or when the driving device is likely to be started up based on the startup request from the first terminal (200A).

11. A remote startup method that is executed by a remote startup system (1) including a first terminal (200A) and a second terminal (200B); a center server (100) communicable with each of the first terminal (200A) and the second terminal (200B), and a vehicle (2) communicable with the center server (100), and starting up a driving device mounted on the vehicle (2) based on a startup request transmitted from each of the first terminal (200A) and the second terminal (200B) to the center server (100), the remote startup method comprising prohibiting startup of the driving device based on the startup request from the other terminal among the first terminal (200A) and the second terminal (200B) when the driving device is started up and being operated based on the startup request from one of the first terminal (200A) and the second terminal (200B) or when the driving device is likely to be started up based on the startup request from the first terminal (200A).
